# EUROPEAN PATENT SPECIFICATION

(11) **EP 4 363 912 B1**
(45) Date of publication and mention of the grant of the patent: **01.04.2026**
(21) Application number: 22738081.3
(22) Date of filing: 27.06.2022
(51) Int. Cl.: G02B 6/44, H02G 3/22

(54) **TRANSITION FOR OPTICAL FIBRE CABLE**
ÜBERGANG FÜR FASEROPTISCHES KABEL
TRANSITION POUR CÂBLE À FIBRES OPTIQUES

(30) Priority: 30.06.2021 SE 2150847
(43) Date of publication of application: 08.05.2024
(73) Proprietor: Roxtec AB, 371 23 Karlskrona (SE)
(72) Inventor: STRÄNG, Daniel, 371 23 KARLSKRONA (SE)
(74) Representative: Ström & Gulliksson AB
(86) International application number: PCT/SE2022/050636
(87) International publication number: WO 2023/277770

(56) References cited:
- JP-A- H09 243 832
- SE-C2- 543 123

## Description

### TECHNICAL FIELD

The present invention concerns a transition for optical fibre cables. It more specifically concerns electromagnetic shielding of optical fibre cables going through a partition of some kind.

### BACKGROUND

The use of optical fibre cables has increased over time. In some installations, where one or several optical fibre cables pass through a partition, it is vital to attenuate electromagnetic disturbances to protect different electrical or electronic equipment on the inside or the outside of the partition.

Electrical and electronic devices, equipment and installations are more or less sensitive to electromagnetic disturbances. Electromagnetic disturbances are electromagnetic radiation which often is emitted by electrical circuits carrying rapidly changing signals, as a by-product of their normal operation, and which causes unwanted signals (interference or noise) to be induced in other electrical circuits. This interrupts, obstructs or otherwise degrades or limits the effective performance of those other circuits. Electromagnetic disturbances can be induced intentionally, as in some forms of electronic warfare, or unintentionally, as a result of spurious emissions, intermodulation products and the like.

Most optical fibre cables do not have any electrically conductive parts that can be used to shield of any disturbances and thus reduce the transmission of electromagnetic interference (EMI). A common method to shield an optical fibre cable is to use waveguides. A waveguide is basically a pipe of an electrical conductive material.

Prior art SE 543 123 describes a transition for an optical fibre cable where the shielding pipe and the optical fibre cable are received inside of a sealing holding means such as a compressible module or a compressible cylindrical seal.

However, installation of such prior art transitions for optical fibers may be difficult in some cases. Hence, one problem with prior art transitions is that they can be relatively complex to use, particularly for some applications.

In the light of the observations above, there is room for further development and improvement when it comes to providing transitions for optical fibre cables through a partition.

### SUMMARY

An object of the present invention is to solve or at least mitigate the problems related to the prior art. This object is achieved by means of the technique set forth in the appended independent claim; preferred embodiments being defined in the related dependent claims.

According to a first aspect, a transition for at least one optical fibre cable through a partition is provided. The transition has a sleeve, a compressible seal and an electromagnetic shielding tube. The sleeve has a first end, a second end and an opening extending in an axial direction from the first end for receiving the compressible seal and the compressible seal is arranged to form a seal around the at least one optical fibre cable. The shielding tube has a first end, a second end and at least one through opening arranged between the first end and the second end for receiving and shielding the at least one optical fiber cable. The second end of the sleeve is connected to the first end of the shielding tube and the at least one through opening of the shielding tube is connected to the opening of the sleeve for transition of the at least one optical fibre cable.

An advantage of the present invention is that the shielding tube forming a waveguide for the optical fibre is connected to the second end of the sleeve. Hence, the shielding tube forms an extension of the sleeve and the transition comprises the sleeve and the shielding tube without any additional assembly of the shielding tube. Consequently, the shielding performances are increased. Moreover, it is easy to assemble and disassemble the transition and to mount the transition into an opening of a partition wall.

According to an embodiment, the second end of the sleeve is integrated with the first end of the shielding tube. For example, the sleeve and the shielding tube are formed in one piece. Hence, an efficient shielding and assembly is achieved. Simultaneously, the sleeve and shielding tube may be cost-efficient to produce and install.

According to an embodiment, the sleeve and the electromagnetic shielding tube comprises or are formed in an electrically conductive material, such as metal (which includes alloys), which apart from efficient shielding also can result in efficient installation to a partition of metal, e.g. by welding. For example, the sleeve and the electromagnetic shielding tube are made in one piece of the same material.

According to an embodiment, the shielding tube projects in the axial direction from the second end of the sleeve. Hence, the shielding tube form an extension of the sleeve in axial direction, wherein the sleeve can receive the compressible seal to provide sealing and the shielding tube provides shielding of the optical fibre cable. The length of the shielding tube can be at least four times an inner diameter of the at least one through opening thereof to provide efficient shielding properties.

According to an embodiment, the shielding tube has a plurality of through openings and the length of the shielding tube is at least four times the inner diameter of each of the through openings. Hence, several optical fibre cables can be arranged through the shielding tube, while the length of the shielding tube is at least four times the length of a single through opening therein.

According to an embodiment, an outer surface of the shielding tube is at least partly threaded. Hence, the transition can be installed in an easy manner, such as by means of a nut cooperating with the thread of the shielding tube to connect the transition to a partition.

According to an embodiment, the compressible seal has a front fitting and a rear fitting and a compressible base. The front fitting and the rear fitting are arranged at opposite ends of the compressible base.

According to an embodiment, the front fitting extends radially outwards so that when the compressible seal is received in the sleeve, the front fitting abuts the first end of the sleeve.

According to an embodiment, the compressible base has an axial through opening extending through the base. The axial through opening is configured to receive one or several modules, each module has an axial opening configured to receive one optical fibre cable extending through the transition.

According to an embodiment, the number of modules arranged in the base of the sleeve corresponds to the number of through openings provided in the shielding tube. Thus, each optical fibre cable extending through the transition, is received in a module in the sleeve and in an individual through opening in the shielding tube.

According to an embodiment, the sleeve is tubular and the shielding tube is tubular. The sleeve has a larger diameter than the shielding tube. Hence, the second end of the sleeve is formed with an abutment surface or a flange extending in a radial direction between an outer tubular surface of the sleeve and the shielding tube, which abutment surface can be used for efficient fastening of the transition to the partition by welding or by clamping by means of a nut when the shielding tube has an exterior thread. When the transition is arranged in a through opening of the partition, the abutment surface may abut the partition, wherein the shielding tube is arranged to extend through the opening of the partition.

According to an embodiment, the sleeve has anti-rotational means extending in an axial direction from the first end of the sleeve. For example, the front fitting has at least one opening for interacting with the anti-rotational means of the sleeve. The anti-rotational means can comprise one or more protrusions for cooperation with corresponding one or more openings of the front fitting. Hence, unintentional rotation of the compressible seal inside the sleeve is efficiently prevented, which reduces the risk of optical fibre cables being damaged during installation or later due to rotation. According to an embodiment, the anti-rotational means have at least two protrusions. Each of the protrusions being provided with a radially extending portion to form a bayonet mount together with the corresponding openings of the front fitting. Alternatively, the anti-rotational means can have one or more screws received in corresponding holes in the first end of the sleeve. The one or more screws cooperate with the corresponding one or more openings of the front fitting to prevent unintentional rotation of the compressible seal inside the sleeve. An advantage of providing anti-rotational means between the sleeve and the front fitting is that the rotational movement of the sleeve relative to the front fitting and the compressible seal is limited. Thus, protecting the cables arranged within the compressible seal of the sleeve and within the shielding pipe. If a cable is not free to rotate, there is a potential risk of damaging the cable before or during installation of a freely rotating compressible seal in the sleeve. Optical fibre cables are particularly fragile that easily snap, break or get damaged if rotated before, during or after installation as it will be sheared off against inner metal edges of the transition. If the anti-rotational solution is combined with an axial lock, such as a radially extending portion of the protrusion(s) of the front fitting to prevent rotation, it also solves the common issue of seals popping out of their sleeves, i.e. seal retention. Nubs on the sleeve or similar protrusions will hinder the fittings and the compressible seal from rotating. Adding an edge or a radially extending portion on the nub, it becomes a so called "bayonet mount" as a small turn of the seal will stop the fitting from both over-rotating and moving away from the sleeve in an axial direction. Also the head of a screw, which also extends in a radial direction, may provide an axial lock in addition to a rotational lock in a corresponding manner.

### BRIEF DESCRIPTION OF THE DRAWINGS

By way of example, embodiments of the present invention will now be described with reference to the accompanying drawings, in which:
Fig. 1 is a schematic perspective view of a transition for a single optical fibre cable through a partition according to an embodiment of the invention,
Fig. 2 is a schematic side view of a part of the transition, that is a sleeve and an electromagnetic shielding tube, according to the embodiment of Fig. 1,
Fig. 3 is a schematic longitudinal cross section view of the sleeve and the electromagnetic shielding tube according to the embodiment of Figs. 1-2,
Fig. 4 is a schematic longitudinal cross section view of the transition for a single optical fibre cable through a partition according to the embodiment of Figs. 1-3,
Fig. 5 is a schematic perspective view of the transition according to the embodiment of Figs. 1-4,
Fig. 6 is a schematic perspective view of the sleeve and the electromagnetic shielding tube according to another embodiment,
Fig. 7 is a schematic side view of the sleeve and the electromagnetic shielding tube according to the embodiment of Fig. 6,
Fig. 8 is a schematic side view of the transition according to another embodiment, which is arranged for receiving a plurality of optical fibre cables,
Fig. 9 is a schematic perspective view of the compressible seal according to an embodiment for receiving a plurality of optical fibre cables,
Fig. 10 illustrates a front view of the sleeve and electromagnetic shielding tube for receiving the compressible seal of Fig. 9,
Fig. 11 illustrates a perspective view of the transition according to the embodiment of Figs. 8-10.

### DETAILED DESCRIPTION OF EMBODIMENTS

Embodiments of the invention will now be described with reference to the accompanying drawings. The invention may, however, be embodied in many different forms and should not be construed as limited to the embodiments set forth herein. In the drawings, like numbers refer to like elements.

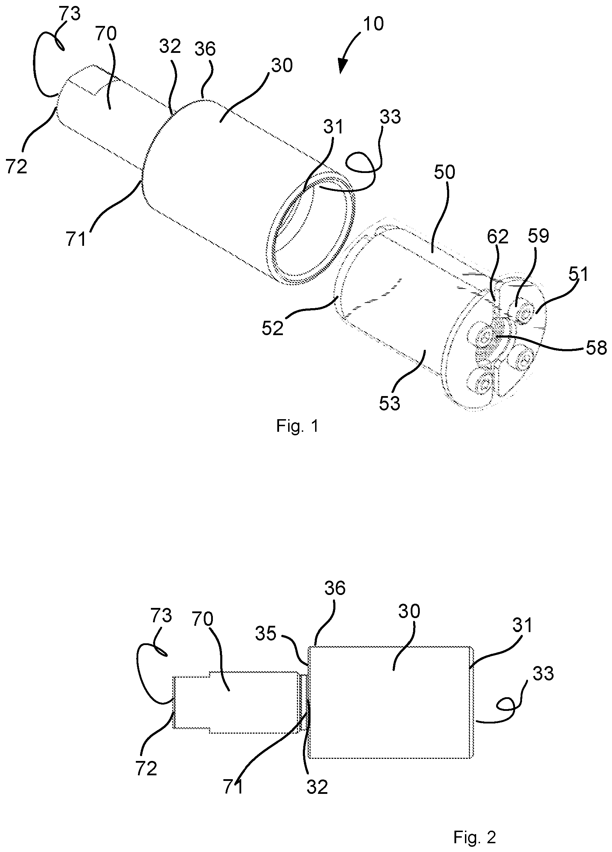

Figure 1 is a perspective view of the transition 10 for an optical fibre cable through a partition according to a first embodiment of the invention. The transition 10 comprises a sleeve 30, an electromagnetic shielding tube 70 and a compressible seal 50. The transition 10 has an axis and is arranged to receive the optical fibre cable in an axial direction through the transition 10. As used in the description, the terms "axial", "radial" and corresponding terms are in view of the axis of the transition 10 and a cable going through it.

According to the present invention the shielding tube 70 of the transition 10 forms at least one waveguide for at least one optical fibre cable. The transition 10 is intended for use when the at least one optical fibre cable is to go through an opening of a partition, such as a wall, a roof, a floor or another separating surface or structure of a house, a building or similar construction, a bulkhead or a deck of a ship, an electrical cabinet, a container or any type of partition or dividing structure. To simplify, the term "partition" will mainly be used in this description as a general term for the different parts through which the optical fibre cable should go or pass.

In figure 1, the sleeve 30 is tubular and has a generally circular cross section. The sleeve 30 has a first end 31 and a second end 32. The electromagnetic shielding tube 70 is tubular and has a generally circular cross section. The electromagnetic shielding tube 70 has a first end 71 and a second end 72. The sleeve 30 and the electromagnetic shielding tube 70 are made of an electrically conductive material such as a metal.

In the first embodiment, the sleeve 30 and the electromagnetic shielding tube 70 are integrated with each other and are, e.g. made in one piece, thus consisting of one material. In other embodiments, the sleeve 30 and the electromagnetic shielding tube 70 could be two individual pieces attached or coupled to one another by welding or by screwing the sleeve 30 onto the electromagnetic shielding tube 70 for instance.

Figure 2 illustrates a side view of the sleeve 30 and the electromagnetic shielding tube 70 according to a first embodiment of the invention. The sleeve 30 has a larger diameter than the shielding tube 70. However, the sleeve 30 and the shielding tube 70 could have the same diameter or the shielding tube 70 could have a larger diameter than the sleeve 30.

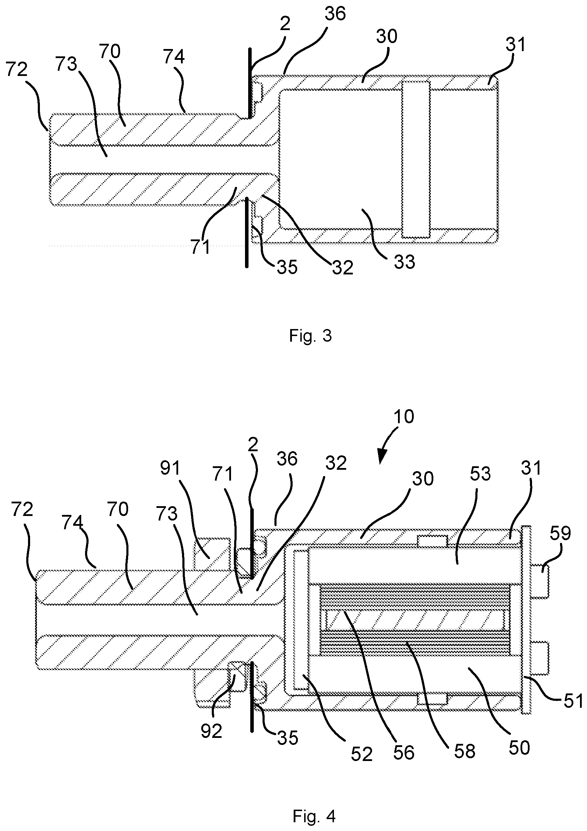

The first end 71 of the electromagnetic shielding tube 70 is, for example, integrated with the second end 32 of the sleeve 30. Hence, the electromagnetic shielding tube 70 extends from the sleeve 30, such as in the axial direction. As illustrated in figure 3, a through opening 73 is arranged between the first end 71 and the second end 72 for receiving and shielding the at least one optical fiber cable. For example, a length of the shielding tube 70 is at least four times the diameter of the through opening 73.

The sleeve 30 is adapted to receive the compressible seal 50, therefore the dimensions of the sleeve 30 are chosen so that a tight fit around the compressible seal 50 is obtained. As can be seen in figure 1, the sleeve 30 is a tubular seal that is hollow on the inside. The hollow inside of the sleeve 30 forms an opening 33 extending in an axial direction from the first end 31 towards the second end 32, wherein the first end 31 is an open end.

The compressible seal 50 is cylindrical and is intended to be inserted through the first end 31 of the sleeve 30 and to be arranged in opening 33. The compressible seal 50 comprises a front fitting 51, a rear fitting 52 and a compressible base 53. The front fitting 51 and the rear fitting 52 are arranged at opposite sides of the compressible base 53. The front and rear fittings 51, 52 are connected to each other by means of screws 59 received in through openings of the compressible base 53. By tightening the screws 59, the front and rear fittings 51, 52, will be pushed towards each other and thus, the compressible base 53, which is made of a compressible material, will be compressed in the axial direction and apply a radial pressure on the tubular walls of the sleeve 30. This will ensure a tight fit between the sleeve 30 and the compressible seal 50. The compressible seal 50 being arranged in the sleeve 30 can be seen in figure 4.

The front fitting 51 is the fitting on that side of the compressible base 53 from which the screws 59 normally are manipulated. The rear fitting 52 is placed on the opposite side to the front fitting 51. The front fitting 51 is given an outer diameter exceeding the inner diameter of the tubular sleeve 30. This is done for a more precise placing of the compressible seal 50, as the front fitting 51 will abut the first end 31 of the sleeve 30.

The compressible base 53 comprises an axial opening 56 that is formed in the centre of the base 53. The axial opening 56 is adapted to receive the optical fibre cable extending through the transition 10. A number of peelable layers 58 are placed on the inside of the axial through opening 56 of the base 53. The layers 58 are peeled off to adapt the inner diameter of the through opening 56 of the compressible base 53 to the outer diameter of the optical fibre cable to be received inside the base 53.

Figures 3 and 4 illustrate the sleeve 30 comprising an abutment surface 35 extending in a radial direction between the tubular surface 36, that is the outer surface of the sleeve 30, and the first end 71 of the shielding tube 70. For example, the abutment surface 35 is formed by the second end of the sleeve 30 having a bigger diameter than the diameter of the shielding tube 70. When the transition 10 is arranged through an opening in a partition 2, the abutment surface 35, abuts the partition 2 and the shielding tube 70 is arranged to extend through the opening of the partition 2.

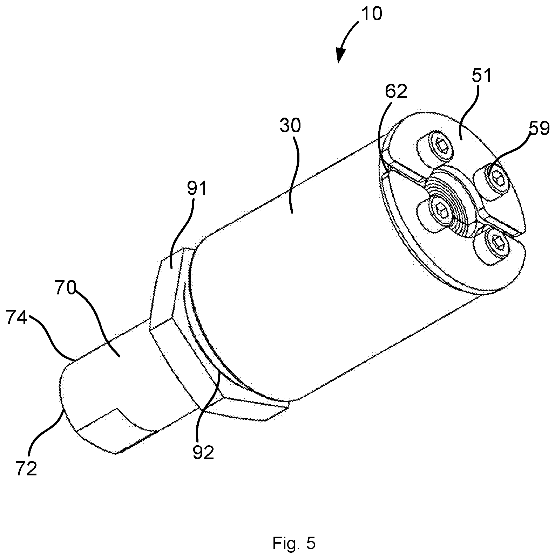

The transition 10 is secured to the partition either by welding or by the use of fastening means. If welding is used to secure the partition, the second end 32 of the sleeve 30 and/or the first end 71 of the shielding tube 70 and/or the abutment surface 35 is/are welded to the partition. The tubular shielding tube 70 has an outer surface 74 extending in the axial direction from the first end 71 of the shielding tube 70 to the second end 72 of the shielding tube 70. The outer surface 74 is at least partly threaded and is configured to receive the fastening means, such as a nut 91 and an optional washer 92 as illustrated in figures 4 and 5.

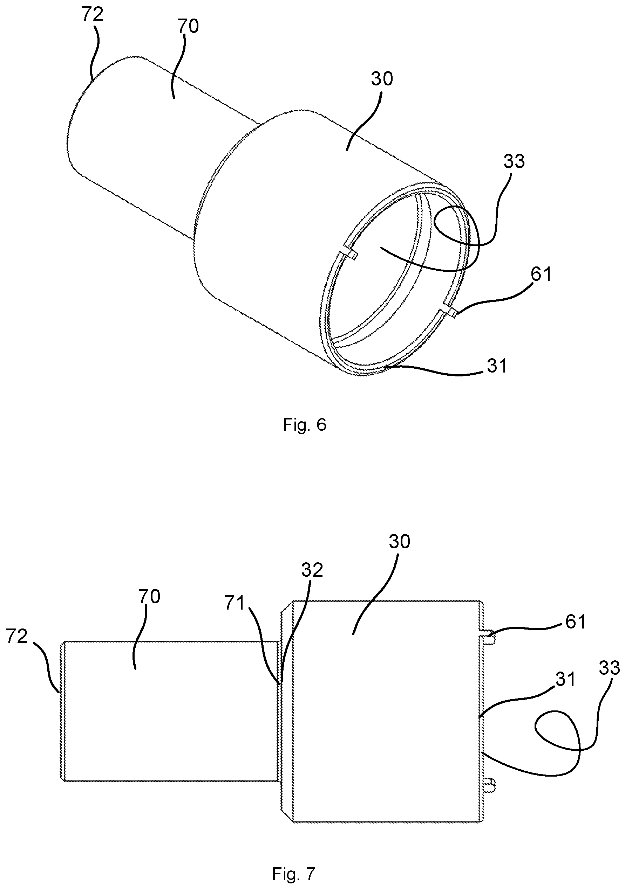

Another aspect of the invention will now be disclosed with reference to figures 6-7. Figure 6 illustrates a perspective view of the sleeve 30 and the electromagnetic shielding tube 70 having all technical features previously described for the sleeve 30 and the electromagnetic shielding tube 70, except that the outer surface of the shielding tube 70 is not formed with any thread. Hence, the embodiment of Figs. 6 and 7 may be fastened to the partition by welding. Moreover, the sleeve 30 and the electromagnetic shielding tube 70 comprises at least one anti-rotational means in the form of one or more protrusions 61 extending in an axial direction from the first end 31 of the sleeve 30. In figures 6 and 7, the sleeve 30 has two protrusions 61 and each protrusion 61 is shown as a nub. The protrusion 61 could also be a screw or a screw head. For example, the protrusions are part of the sleeve 30, and protrude in the axial direction from the first end 31 of sleeve 30. If the protrusion 61 is a screw or the head of a screw, then the first end 31 of sleeve 30 comprises one or several openings for fastening the shank of the screw within the opening.

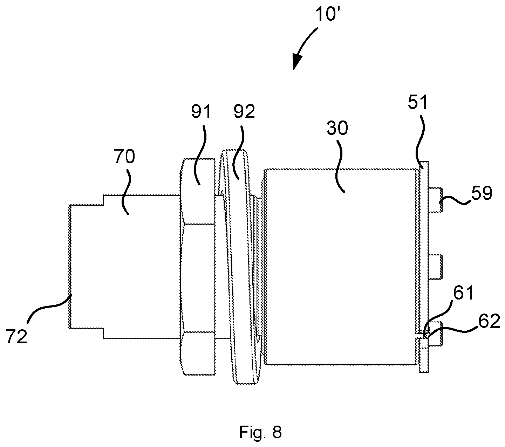

As can be seen in, e.g. Fig. 8, the front fitting 51 is provided as two parts with two openings 62 formed by the space provided between the two parts. Each opening 62 fits one protrusion 61 of the sleeve 30. By arranging a protrusion 61 in each opening 62, the rotational movement of the sleeve 30 relative to the front fitting 51 and the compressible seal 50 will be limited. Figure 8 illustrates the transition 10 comprises protrusions 61 extending in the axial direction from the first end 31 of the sleeve 30. Hence, according to one embodiment the sleeve 30 comprises the one or more protrusions 61 cooperating with corresponding openings 62 of the front fitting 51 to prevent unintentional rotation of the compressible seal 50, 50' inside the sleeve 30.

Although not illustrated in the figures, the protrusion 61 could also be provided with a radially extending portion, e.g. extending from the top of the protrusion 61 and being at an angle, such as perpendicular, to the protrusion 61. The radially extending portion is arranged to prevent unintentional axial movement of the compressible seal 50, 50' in an outward direction. Hence, the radially extending portion of the protrusion 61 forms a stop against axial movement for the compressible seal 50, 50' at the first end 31 of the sleeve 30. For example, the radially extending portion extends essentially parallel to a front surface of the front fitting 51 when the compressible seal 50, 50' is inserted in the sleeve 30. For example, the protrusions 61 with the radially extending portion cooperate with the openings 62 of the front fitting 51 to prevent both unintentional rotation and unintentional axial movement of the compressible seal 50, 50' inside the sleeve 30. For example, the protrusions 61 with the radially extending portion cooperate with the openings 62 of the front fitting 51 to form a bayonet mount, which limits both rotational and axial movement of the front fitting 51 and the compressible seal 50, 50' relative to the sleeve 30.

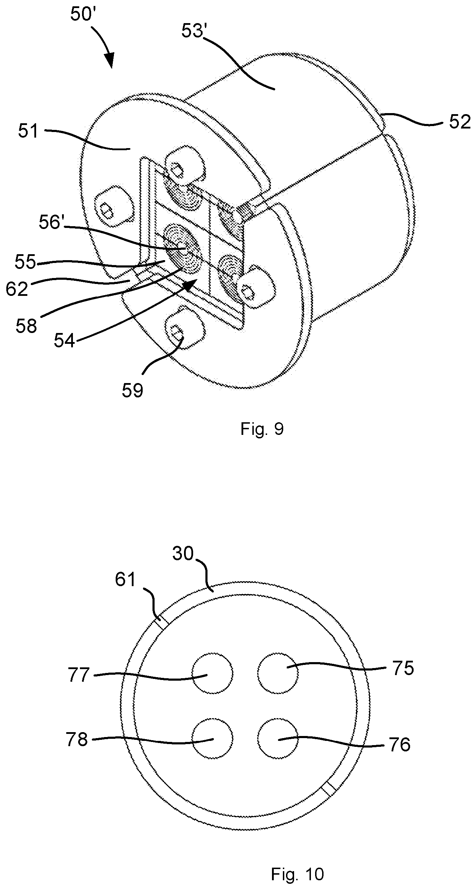

With reference to Figs. 8-11, an embodiment of the present invention is illustrated for leading a plurality of optical fibre cables through the partition. Fig. 8 is a side view of a transition 10' adapted to lead several optical fibre cables through a partition. Figure 9 shows a perspective view of the compressible seal 50' of Fig. 8, which comprises the front fitting 51, the rear fitting 52, screws 59, openings 62 with the technical features and functions as described above. These features will therefore not be described in detail again. The features that differ from the features of the transition 10 for a single optical fibre cable will be described below. Other features provided in the transition 10 for a single optical fibre correspond to similar features of the transition 10' for more than one optical fibre cable or are understood by a skilled person from the disclosure of the invention.

A compressible base 53' has, as previously described for the compressible base 53, the front fitting 51 and the rear fitting 52 arranged at opposite sides of the compressible base 53, 53'. The compressible base 53' comprises an axial opening extending through the base 53'. The axial opening is adapted to receive modules 54. In figures 9-11, the base 53' is adapted to receive four modules 54. However, it is equally possible to provide another number of modules 54 inside the base 53'. The shape and the size of the axial opening of the base 53' is adapted to the number of modules 54 that are provided inside the base 53'. Each axial opening 56' is adapted to receive one optical fibre cable. Each cable placed inside the transition 10' passes through an axial through opening 56' of a module 54 place in the compressible seal 50'. It is optional to lead a cable through the module 54.

Each module 54 comprises a first module half 55, a second module half 55 and the axial opening 56' formed in the centre of the module 54. The axial opening 56' is adapted to receive the optical fibre cable extending through the transition 10'. The opening 56' is formed by means of a semi-cylindrical recess in respective module halves 55. Thus, the opening 56' is formed in that two module halves 55 are placed against each other with the semi-cylindrical recesses facing each other. A number of peelable layers 58' are placed on the inside of the axial through opening 56' of the module 54. The layers 58' of the module 54 are peeled off to adapt the inner diameter of the through opening 56' of the module 54 to the outer diameter of the optical fibre cable to be received inside the module 54. The module halves may be identical and the peelable layers are optional.

Figure 10 shows a front view of the sleeve 30 and the electromagnetic shielding tube 70' for receiving more than one optical fibre cable according to the embodiment of figure 9. In this embodiment, as several cables are led through the shielding tube 70' and the sleeve 30, a plurality of through openings 75, 76, 77, 78 are provided in the shielding tube 70'. Each through opening 75, 76, 77, 78, being arranged between the first end 71 and the second end 72, receives and shields one optical fiber cable. Thus, individual shielding, integrated into the transition 10' is provided for each optical fibre cable. Moreover, the first through opening 75, the second through opening 76, the third through opening 77 and the fourth through opening 78 of the shielding tube 70 are all connected to the opening 33 of the sleeve 30 for the transition of the four optical fibre cables. The number of modules 54 provided inside of sleeve 30 corresponds to the number of through openings 75, 76, 77, 78 of electromagnetic shielding tube 70'.

So far, the invention has been described with reference to different embodiments, but it is readily understood that the technical features of these embodiments may be combined. Meaning that, the transition 10, 10' can be adapted to receive one optical fibre cable or several optical fibre cables.

If the transition 10 is adapted to hold a single optical fibre cable, then the compressible seal 50 comprises a compressible base 53 with an axial opening 56 that is adapted to receive the optical fibre cable. When the optical fibre cable passes from the compressible seal 50 into the electromagnetic shielding tube 70, that is, where the first end 71 of the electromagnetic shielding tube 70 and the second end 32 of the sleeve 30 are joined together, then the optical fibre cable is arranged in the through opening 73 extending between the first end 71 and the second end 72 of the electromagnetic shielding tube 70.

If the transition 10' is adapted to hold several optical fibre cables, then the compressible seal 50' comprises one module 54 for each optical fibre cable with an axial opening 56' that is adapted to receive one optical fibre cable. When the optical fibre cables passes from the compressible seal 50' into the electromagnetic shielding tube 70', that is, where the first end 71 of the electromagnetic shielding tube 70' and the second end 32 of the sleeve 30 are joined together, then the optical fibre cables are arranged in the separate through openings 75-78 extending between the first end 71 and the second end 72 of the electromagnetic shielding tube 70'.

The embodiment with one or more protrusions 61 extending in an axial direction from the first end 31 of the sleeve 30 to prevent rotation as described above can be used with the transition 10 for a single cable and for the transition 10' for multiple cables.

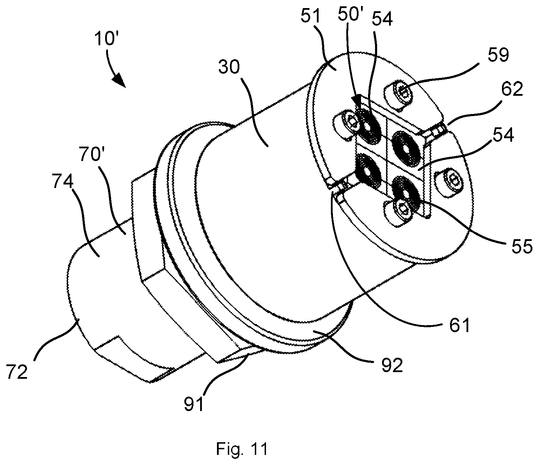

As an example, figure 11 illustrates a perspective view of the transition 10' for leading multiple cables, such as four optical fibre cables, through a partition. The transition 10' comprises two protrusions 61, the protrusions being nubs. Each nub is arranged in an opening 62 of the front fitting 51. Thus, restricting the rotational movement of the sleeve 30 relative to the front fitting 51 and the compressible seal 50. Furthermore, the transition 10' is secured to the partition by using a nut 91 and a washer 92 as previously described.

## Claims

1. A transition (10, 10') for at least one optical fibre cable through a partition (2), wherein the transition (10, 10') comprises
a sleeve (30), a compressible seal (50, 50') and an electromagnetic shielding tube (70, 70'), wherein
the sleeve (30) has a first end (31), a second end (32) and an opening (33) extending in an axial direction from the first end (31) for receiving the compressible seal (50, 50'), wherein the compressible seal (50, 50') is arranged to form a seal around the at least one optical fibre cable,
the shielding tube (70, 70') has a first end (71), a second end (72) and at least one through opening (73, 75, 76, 77, 78) arranged between the first end (71) and the second end (72) for receiving and shielding the at least one optical fiber cable, **characterised in that**
the second end (32) of the sleeve (30) is connected to the first end (71) of the shielding tube (70, 70') wherein the at least one through opening (73, 75, 76, 77, 78) of the shielding tube (70, 70') is connected to the opening (33) of the sleeve (30) for transition of the at least one optical fibre cable.

2. The transition according to claim 1, wherein the second end (32) of the sleeve (30) is integrated with the first end (71) of the shielding tube (70, 70').

3. The transition according to claim 1 or 2, wherein the sleeve (30) and the electromagnetic shielding tube (70, 70') comprise an electrically conductive material.

4. The transition according to claim 3, wherein the sleeve (30) and the electromagnetic shielding tube (70, 70') comprise a metal.

5. The transition according to any of the preceding claims, wherein the electromagnetic shielding tube (70, 70') projects in the axial direction from the second end (32) of the sleeve (30).

6. The transition according to any of the preceding claims, wherein a length of the electromagnetic shielding tube (70, 70') is at least four times an inner diameter of the at least one through opening (73, 75, 76, 77, 78) thereof.

7. The transition according to claim 6, wherein the electromagnetic shielding tube (70') comprises a plurality of through openings (75, 76, 77, 78) and wherein the length of the electromagnetic shielding tube (70') is at least four times the inner diameter of each of the through openings (75, 76, 77, 78).

8. The transition according to any of the preceding claims, wherein the compressible seal (50, 50') comprises a front fitting (51) and a rear fitting (52) and a compressible base (53, 53'), wherein the front fitting (51) and the rear fitting (52) are arranged at opposite ends of the compressible base (53, 53').

9. The transition according to any of the preceding claims, wherein the sleeve (30) is tubular and the electromagnetic shielding tube (70, 70') is tubular, wherein the sleeve (30) has a larger diameter than the electromagnetic shielding tube (70, 70').

10. The transition according to claim 9, wherein the second end (32) of the sleeve (30) comprises an abutment surface (35) extending in a radial direction between an outer tubular surface (36) of the sleeve (30) and the electromagnetic shielding tube (70, 70').

11. The transition according to claim 5, wherein the sleeve (30) comprises anti-rotational means extending in an axial direction from the first end (31) of the sleeve (30).

12. The transition according to claims 8 and 11, wherein the front fitting (51) comprises at least one opening (62) for interacting with the anti-rotational means of the sleeve (30).

13. The transition according to claim 12, wherein the anti-rotational means comprises one or more protrusions (61) for cooperation with corresponding one or more openings (62) of the front fitting (51).

14. The transition according to claim 13, wherein the anti-rotational means comprises at least two protrusions (61), each of the protrusions (61) being provided with a radially extending portion to form a bayonet mount together with the corresponding openings (62) of the front fitting (51).

15. The transition according to claim 12, wherein the anti-rotational means comprises one or more screws received in corresponding holes in the first end (31) of the sleeve (30), wherein the one or more screws cooperate with the corresponding one or more openings (62) of the front fitting (51).

## Patentansprüche

1. Übergang (10, 10') für mindestens ein faseroptisches Kabel durch eine Trennwand (20), wobei der Übergang (10, 10') umfasst:
eine Hülse (30), eine komprimierbare Dichtung (50, 50') und ein elektromagnetisches Abschirmungsrohr (70, 70'),
wobei
die Hülse (30) ein erstes Ende (31), ein zweites Ende (32) und eine Öffnung (33) aufweist, die sich in einer axialen Richtung von dem ersten Ende (31) erstreckt, um die komprimierbare Dichtung (50, 50') aufzunehmen,
wobei die komprimierbare Dichtung (50, 50') gestaltet ist, um eine Dichtung um das mindestens eine faseroptische Kabel (70, 70') zu bilden,
das Abschirmungsrohr (70, 70') ein erstes Ende (71), ein zweites Ende (72) und mindestens eine Durchgangsöffnung (73, 75, 76, 77, 78), die zwischen dem ersten Ende (71) und dem zweiten Ende (72) angeordnet ist, zum Aufnehmen und Abschirmen des mindestens einen faseroptischen Kabels aufweist,
**dadurch gekennzeichnet, dass**
das zweite Ende (32) der Hülse (30) mit dem ersten Ende (71) des Abschirmungsrohrs (70, 70') verbunden ist,
wobei die mindestens eine Durchgangsöffnung (73, 75, 76, 77, 78) des Abschirmungsrohrs (70, 70') mit der Öffnung (33) der Hülse (30) für einen Übergang des mindestens einen faseroptischen Kabels verbunden ist.

2. Übergang nach Anspruch 1, wobei das zweite Ende (32) der
Hülse (30) mit dem ersten Ende (71) des Abschirmungsrohrs (70, 70') integriert ist.

3. Übergang nach Anspruch 1 oder 2, wobei
das elektromagnetische Abschirmungsrohr (70, 70') ein elektrisch leitfähiges Material umfasst.

4. Übergang nach Anspruch 3, wobei
das elektromagnetische Abschirmungsrohr (70, 70') ein Metall umfasst.

5. Übergang nach einem der vorhergehenden Ansprüche, wobei das elektromagnetische Abschirmungsrohr (70, 70') in der axialen Richtung von dem zweiten Ende (32) der Hülse (30) vorsteht.

6. Übergang nach einem der vorhergehenden Ansprüche, wobei eine Länge des elektromagnetischen Abschirmungsrohrs (70, 70') mindestens das Vierfache eines Innendurchmessers der mindestens einen Durchgangsöffnung (73, 75, 76, 77, 78) davon beträgt.

7. Übergang nach Anspruch 6, wobei das elektromagnetische Abschirmungsrohr (70, 70') eine Vielzahl von Durchgangsöffnungen (75, 76, 77, 78) umfasst und wobei die Länge des elektromagnetischen Abschirmungsrohrs (70) mindestens das Vierfache des Innendurchmessers von jeder der Durchgangsöffnungen (75, 76, 77, 78) davon beträgt.

8. Übergang nach einem der vorhergehenden Ansprüche, wobei die komprimierbare Dichtung (50, 50') ein vorderes Anschlussstück (51) und ein hinteres Anschlussstück (52) und eine komprimierbare Basis (53, 53') umfasst, wobei das vordere Anschlussstück (51) und das hintere Anschlussstück (52) an gegenüberliegenden Enden der komprimierbaren Basis (53, 53') angeordnet sind.

9. Übergang nach einem der vorhergehenden Ansprüche, wobei die Hülse (30) rohrförmig ist und das elektromagnetische Abschirmungsrohr (70, 70') rohrförmig ist, wobei die Hülse (30) einen größeren Durchmesser als das elektromagnetische Abschirmungsrohr (70, 70') aufweist.

10. Übergang nach Anspruch 9, wobei das zweite Ende (32) der Hülse (30) eine Anlagefläche (35) umfasst, die sich in einer radialen Richtung zwischen einer äußeren rohrförmigen Fläche (36) der Hülse (30) und dem elektromagnetischen Abschirmungsrohr (70, 70') erstreckt.

11. Übergang nach Anspruch 5, wobei die Hülse (30) ein
Drehsicherungsmittel umfasst, das sich in einer axialen Richtung von dem ersten Ende (31) der Hülse (30) erstreckt.

12. Übergang nach Ansprüchen 8 und 11, wobei das vordere Anschlussstück (51) mindestens eine Öffnung (62) zum Zusammenwirken mit dem Drehsicherungsmittel der Hülse (30) umfasst.

13. Übergang nach Anspruch 12, wobei
das Drehsicherungsmittel einen oder mehrere Vorsprünge (61) zum Zusammenwirken mit entsprechenden einer oder mehreren
Öffnungen (62) des vorderen Anschlussstücks (51) umfasst.

14. Übergang nach Anspruch 13, wobei
das Drehsicherungsmittel mindestens zwei Vorsprünge (61) umfasst, wobei jeder der Vorsprünge (61) versehen ist mit
einem sich radial erstreckenden Abschnitt, um zusammen mit den entsprechenden Öffnungen (62) des vorderen Anschlussstücks (51) eine Bajonett-Fassung zu bilden.

15. Übergang nach Anspruch 12, wobei
das Drehsicherungsmittel eine oder mehrere Schrauben umfasst, die in entsprechenden Löchern in dem ersten Ende (31) der
Hülse (30) aufgenommen sind, wobei die eine oder mehreren Schrauben mit der entsprechenden einen oder mehreren
Öffnung(en) (62) des vorderen Anschlussstücks (51) zusammenwirken.

## Revendications

1. Transition (10, 10') pour au moins un câble à fibres optiques à travers une cloison (2), dans laquelle la transition (10, 10') comprend
un manchon (30), un joint compressible (50, 50') et un tube de blindage électromagnétique (70, 70'), dans laquelle
le manchon (30) présente une première extrémité (31), une seconde extrémité (32) et une ouverture (33) s'étendant dans une direction axiale depuis la première extrémité (31) pour recevoir le joint compressible (50, 50'), dans laquelle le joint compressible (50, 50') est agencé pour former un joint autour de l'au moins un câble à fibres optiques,
le tube de blindage (70, 70') présente une première extrémité (71), une seconde extrémité (72) et au moins une ouverture traversante (73, 75, 76, 77, 78) agencée entre la première extrémité (71) et la seconde extrémité (72) pour recevoir et blinder l'au moins un câble à fibres optiques,
**caractérisée en ce que**
la seconde extrémité (32) du manchon (30) est reliée à la première extrémité (71) du tube de blindage (70, 70'), dans laquelle l'au moins une ouverture traversante (73, 75, 76, 77, 78) du tube de blindage (70, 70') est reliée à l'ouverture (33) du manchon (30) pour la transition de l'au moins un câble à fibres optiques.

2. Transition selon la revendication 1, dans laquelle la seconde extrémité (32) du manchon (30) est intégrée à la première extrémité (71) du tube de blindage (70, 70').

3. Transition selon la revendication 1 ou 2, dans laquelle le manchon (30) et le tube de blindage électromagnétique (70, 70') comprennent un matériau électriquement conducteur.

4. Transition selon la revendication 3, dans laquelle le manchon (30) et le tube de blindage électromagnétique (70, 70') comprennent un métal.

5. Transition selon l'une quelconque des revendications précédentes, dans laquelle le tube de blindage électromagnétique (70, 70') fait saillie dans la direction axiale à partir de la seconde extrémité (32) du manchon (30).

6. Transition selon l'une quelconque des revendications précédentes, dans laquelle une longueur du tube de blindage électromagnétique (70, 70') est au moins quatre fois un diamètre intérieur de l'au moins une de ses ouvertures traversantes (73, 75, 76, 77, 78).

7. Transition selon la revendication 6, dans laquelle le tube de blindage électromagnétique (70') comprend une pluralité d'ouvertures traversantes (75, 76, 77, 78) et dans laquelle la longueur du tube de blindage électromagnétique (70') est au moins quatre fois le diamètre intérieur de chacune des ouvertures traversantes (75, 76, 77, 78).

8. Transition selon l'une quelconque des revendications précédentes, dans laquelle le joint compressible (50, 50') comprend un raccord avant (51) et un raccord arrière (52) et une base compressible (53, 53'), dans laquelle le raccord avant (51) et le raccord arrière (52) sont agencés à des extrémités opposées de la base compressible (53, 53').

9. Transition selon l'une quelconque des revendications précédentes, dans laquelle le manchon (30) est tubulaire et le tube de blindage électromagnétique (70, 70') est tubulaire, dans laquelle le manchon (30) présente un diamètre plus grand que le tube de blindage électromagnétique (70, 70').

10. Transition selon la revendication 9, dans laquelle la seconde extrémité (32) du manchon (30) comprend une surface de butée (35) s'étendant dans une direction radiale entre une surface tubulaire externe (36) du manchon (30) et le tube de blindage électromagnétique (70, 70').

11. Transition selon la revendication 5, dans laquelle le manchon (30) comprend des moyens anti-rotation s'étendant dans une direction axiale à partir de la première extrémité (31) du manchon (30).

12. Transition selon les revendications 8 et 11, dans laquelle le raccord avant (51) comprend au moins une ouverture (62) pour interagir avec les moyens anti-rotation du manchon (30).

13. Transition selon la revendication 12, dans laquelle les moyens anti-rotation comprennent une ou plusieurs saillies (61) pour coopérer avec une ou plusieurs ouvertures (62) correspondantes du raccord avant (51).

14. Transition selon la revendication 13, dans laquelle les moyens anti-rotation comprennent au moins deux saillies (61), chacune des saillies (61) étant pourvue d'une partie s'étendant radialement pour former un montage à baïonnette avec les ouvertures (62) correspondantes du raccord avant (51).

15. Transition selon la revendication 12, dans laquelle les moyens anti-rotation comprennent une ou plusieurs vis reçues dans des trous correspondants dans la première extrémité (31) du manchon (30), dans laquelle les une ou plusieurs vis coopèrent avec les une ou plusieurs ouvertures (62) correspondantes du raccord avant (51).
